# EUROPÄISCHE PATENTSCHRIFT

(11) **EP 4 519 552 B1**
(45) Veröffentlichungstag und Bekanntmachung des Hinweises auf die Patenterteilung: **14.01.2026**
(21) Anmeldenummer: 23704863.2
(22) Anmeldetag: 09.02.2023
(51) Int. Cl.: F03B 3/18

(54) **LEITSCHAUFEL**
GUIDE VANE
AUBE DIRECTRICE

(30) Priorität: 03.05.2022 AT 503032022
(43) Veröffentlichungstag der Anmeldung: 12.03.2025
(73) Patentinhaber: Andritz Hydro GmbH, 1120 Wien (AT)
(72) Erfinder: OSWALD, Markus, 4614 Marchtrenk (AT); PEYREDER, Rudolf, 4040 Linz (AT); WEISSENBERGER, Simon, 4100 Ottensheim (AT)
(74) Vertreter: Wirnsberger & Lerchbaum Patentanwälte OG
(86) Internationale Anmeldenummer: PCT/AT2023/060037
(87) Internationale Veröffentlichungsnummer: WO 2023/212757

(56) Entgegenhaltungen:
- EP-B1- 3 791 059
- WO-A1-95/10705
- DE-C- 458 024
- FR-A- 372 975

## Beschreibung

Die Erfindung betrifft eine Leitschaufel für ein Leitrad einer Pumpe oder Turbine, aufweisend einen Leitschaufelkörper mit zwei Stirnflächen, einer Leitschaufeleintrittskante, einer Leitschaufelaustrittskante sowie einer ersten strömungsführenden Seitenfläche und einer zweiten strömungsführenden Seitenfläche, welche die Leitschaufeleintrittskante und die Leitschaufelaustrittskante verbinden und entlang einer axialen Erstreckung unterschiedliche Strömungsprofile ausbilden, welche jeweils eine Profilsehne, eine Skelettlinie und einen Skelettkurvenendwinkel, unter welchem die Skelettlinie an der Leitschaufelaustrittskante zur Profilsehne steht, aufweisen, wobei die Leitschaufel um eine Drehachse, welche insbesondere durch zwei Drehzapfen definiert ist, drehbar lagerbar ist, wobei die Leitschaufel entlang der axialen Erstreckung mindestens ein Strömungsprofil mit einem positiven Skelettkurvenendwinkel und mindestens ein Strömungsprofil mit einem negativen Skelettkurvenendwinkel aufweist.

Weiter betrifft die Erfindung ein Verfahren zum Auslegen einer Wasserkraftanlage, insbesondere einer Pumpe oder Turbine, mit einem Leitrad, welches Leitschaufeln aufweist, insbesondere einer Kaplan- oder Francis-Turbine, wobei durch Variation von Designparametern Varianten gebildet und Strömungsverhältnisse ermittelt werden, welche durch Umsetzung der einzelnen Varianten erreichbar sind, insbesondere mittels Strömungssimulationen oder durch Versuche, wonach abhängig von erreichbaren Strömungsverhältnissen eine der Varianten gewählt wird, insbesondere jene Variante, bei welcher ein Wirkungsgradoptimum erreicht wird.

Leitschaufeln sind aus dem Stand der Technik bekannt geworden, um insbesondere bei Turbinen ein Arbeitsmittel in einem optimalen Winkel auf Laufschaufeln eines Laufrades zu leiten. Im Unterschied zu den mit dem Laufrad drehbaren Laufschaufeln sind die Leitschaufeln in aller Regel stationär angeordnet, können jedoch in einem Einlaufgehäuse um die Drehachse gedreht werden, um eine Strömung zu beeinflussen und gegebenenfalls einen Massenstrom zu unterbinden. Hierzu können beispielsweise bei Kaplan- oder Francis-Turbinen die Leitschaufeln regelmäßig entlang eines zum Laufrad koaxialen Kreises im Einlaufgehäuse angeordnet sein, wodurch sich ein sogenannter Leitapparat ergibt, der auch als Leitring bezeichnet wird.

Bei Wasserkraftwerken ist ein erreichbarer Wirkungsgrad von hoher Bedeutung, weswegen bei der Auslegung eines Wasserkraftwerkes in der Regel zunächst Varianten durch Variation von üblichen Designparametern gebildet und anschließend durch Analyse der Strömungseigenschaften der einzelnen Varianten ermittelt wird, mit welcher der Varianten die besten Ergebnisse erreicht werden können, insbesondere ein optimaler Wirkungsgrad. Üblicherweise werden hierzu computerimplementierte Strömungssimulationen eingesetzt.

Aus dem Stand der Technik sind so unterschiedliche Designparameter bekannt geworden, die zur Variantenbildung variiert werden und die somit einen Lösungsraum aufspannen, in dem nach einer optimalen Lösung gesucht wird, indem einzelne Varianten rechnerisch und/oder empirisch untersucht werden. Designparameter können beispielsweise bei einer Leitschaufel der Skelettkurvenendwinkel, eine Profildicke und ein Verlauf bzw. eine Wölbung der Skelettlinie sein, die zu einer Vielzahl von möglichen Varianten führen.

Beispielsweise ist aus dem Dokument EP 3 791 059 B1 ein Leitrad für eine Pumpturbine bekannt geworden, bei welchem das Strömungsprofil im Mittelbereich der Leitschaufel einen größeren Leitschaufelwinkel aufweist als ein Strömungsprofil im Randbereich der Leitschaufel.

Weiter ist aus dem Dokument WO 95/10705 A1 eine Hydraulikturbine mit Leitschaufeln bekannt geworden, bei welcher die Leitschaufeln zur Drehachse parallele Eintritts- und Austrittskanten aufweisen.

Es hat sich jedoch gezeigt, dass alleine durch Variation von aus dem Stand der Technik bekannten Designparametern in vielen Fällen nur unbefriedigende Ergebnisse erreicht werden.

Hier setzt die Erfindung an. Aufgabe der Erfindung ist es, eine Leitschaufel der eingangs genannten Art anzugeben, mit welcher eine Strömung in einem Wasserkraftwerk derart beeinflusst werden kann, dass ein verbesserter Wirkungsgrad erreichbar ist.

Weiter soll ein Verfahren der eingangs genannten Art angegeben werden, mit welchem eine verbesserte Auslegung einer Wasserkraftanlage möglich ist, insbesondere um eine Wasserkraftanlage mit einem höheren Wirkungsgrad zu erreichen.

Die erste Aufgabe wird erfindungsgemäß durch eine Leitschaufel der eingangs genannten Art gelöst, bei welcher die Leitschaufeleintrittskante gegenüber der Drehachse geneigt ist.

Im Rahmen der Erfindung wurde erkannt, dass durch eine Variation des Skelettkurvenendwinkels von einem positiven Skelettkurvenendwinkel beispielsweise in einem unteren Bereich der Leitschaufel zu einem negativen Skelettkurvenendwinkel beispielsweise in einem oberen Bereich der Leitschaufel eine günstige Beeinflussung der Strömung möglich ist, durch welche ein erhöhter Wirkungsgrad erreicht werden kann. Eine solche Verformung des Profils entlang einer Länge bzw. einer axialen Erstreckung der Schaufel durch Änderung des Skelettkurvenendwinkels wird auch als Profilstrak bezeichnet. Folglich kann eine entsprechende Leitschaufel auch als Leitschaufel mit einem Strak bezeichnet werden.

Als axiale Erstreckung wird hier eine Erstreckung entlang der Drehachse, um welche die Leitschaufel drehbar lagerbar ist, angesehen.

Als Leitschaufeleintrittskante wird jene Kante bzw. jenes Ende der Leitschaufel angesehen, auf welches eine Strömung bei einem Turbinenbetrieb zunächst auftrifft.

Es versteht sich, dass Leitschaufeleintrittskante und Leitschaufelaustrittskante nicht zwingend als Kanten im geometrischen Sinn zu verstehen sind, sondern beispielsweise auch durch entsprechend gekrümmte Flächen gebildet sein können, sodass beispielsweise die Leitschaufelaustrittskante tatsächlich eine Leitschaufelaustrittsfläche sein kann.

Anders ausgedrückt ergibt sich durch die Möglichkeit, die Lage der Skelettlinie relativ zur Profilsehne entlang der axialen Erstreckung der Leitschaufel zu verändern, sodass der Skelettkurvenendwinkel von positiv auf negativ wechselt, ein zusätzlicher Designparameter, durch welchen der Lösungsraum vergrößert wird. Es hat sich gezeigt, dass dadurch in vielen Fällen ein höherer Wirkungsgrad erreichbar ist.

Die Begriffe unten und oben können sich dabei auf einen bestimmungsgemäßen Einsatz der Leitschaufel an einer Wasserkraftanlage mit vertikaler Achse beziehen, sodass der untere Bereich üblicherweise näher am Laufrad als der obere Bereich der Leitschaufel ist.

So hat sich gezeigt, dass eine Strömung an den Leitschaufeln bei diesen Wasserkraftanlagen über eine Höhe sehr unterschiedlich ausgeprägt ist, insbesondere da die Strömung in manchen Bereichen geometriebedingt beschleunigt wird. Durch Einsatz einer gestrakten Leitschaufel mit entlang der Höhe, welche hier auch als axiale Erstreckung bzw. Erstreckung entlang der Drehachse bezeichnet wird, von positiv auf negativ bzw. von negativ auf positiv wechselndem Skelettkurvenendwinkel kann dieser Inhomogenität der Strömung besonders gut Rechnung getragen werden, wodurch eine verbesserte Zuströmung zum Laufrad erreicht, Verluste minimiert und ein Wirkungsgrad verbessert werden können.

Es versteht sich, dass die Leitschaufeln natürlich auch an einer Wasserkraftanlage mit horizontaler Achse eingesetzt werden können. In diesem Fall ist unten als laufradnah und oben als laufradfern zu interpretieren. Im Leitapparat werden die Leitschaufeln üblicherweise etwa entlang eines Kreises angeordnet und gleichmäßig entlang des Kreisumfangs, welcher koaxial mit dem Laufrad ist, verteilt und über Drehzapfen drehbar gelagert, wenngleich grundsätzlich auch andere Anordnungen möglich sind. In vielen Fällen sind die Drehachsen der einzelnen Leitschaufeln im Leitapparat etwa parallel. Die erfindungsgemäßen Leitschaufeln können auch bei Rohrturbinen eingesetzt werden, wobei Drehachsen der einzelnen Leitschaufeln üblicherweise nicht parallel sind.

Die erfindungsgemäßen Leitschaufeln können auch bei Rohrturbinen eingesetzt werden, wobei die Drehachsen der Leitschaufeln nicht parallel zur Achse der Wasserkraftanlage sind. In diesem Fall sind die Begriffe unten und oben als radial innen und radial außen bei bestimmungsgemäßer Anordnung im Leitapparat zu interpretieren, sodass ein unterer Bereich einer Leitschaufel näher an der Achse der Rohrturbine ist als ein oberer Bereich.

Weiter können erfindungsgemäße Leitschaufeln natürlich auch bei Dériaz-Turbinen bzw. Diagonal-Turbinen eingesetzt werden.

Als Strömungsprofile werden gedachte Schnitte durch die Leitschaufel normal zu einer Drehachse, um welche die Leitschaufel drehbar lagerbar bzw. drehbar gelagert ist, verstanden. Die Drehachse kann mit einer Längsachse der Leitschaufel zusammenfallen und wird üblicherweise durch Drehzapfen definiert, welche an den Stirnseiten der Leitschaufeln angebracht sind und mit entsprechenden Lagerstellen im Einlaufgehäuse korrespondieren.

Als Skelettlinie wird eine Verbindungslinie der in ein Profil eingeschriebenen Kreismittelpunkte bezeichnet. Die Skelettlinie ist entsprechend an jeder Position äquidistant zu den strömungsführenden Seitenflächen und verbindet die Leitschaufeleintrittskante mit der Leitschaufelaustrittskante.

Als Profilsehne wird eine gerade Verbindungslinie von Leitschaufeleintrittskante und Leitschaufelaustrittskante bezeichnet.

Als positiver Skelettkurvenendwinkel wird hier ein entgegen dem Uhrzeigersinn gemessener Winkel von der Skelettlinie zur Profilsehne bei Blickrichtung von einer oberen Stirnseite der Leitschaufel in Richtung der unteren Stirnseite, also in Draufsicht, angesehen, wenn die Profilsehne von der Skelettlinie entgegen dem Uhrzeigersinn weniger weit als im Uhrzeigersinn beabstandet ist. Bei entsprechender Anordnung der Leitschaufel, sodass die Leitschaufeleintrittskante links und die Leitschaufelaustrittskante rechts positioniert sind, ergibt eine in Draufsicht oberhalb der Profilsehne im Bereich der Leitschaufelaustrittskante angeordnete Skelettlinie somit einen positiven Skelettkurvenendwinkel und eine unterhalb der Profilsehne angeordnete Skelettlinie einen negativen Skelettkurvenendwinkel.

Die erfindungsgemäßen Wirkungen eines erhöhten Wirkungsgrades durch den entlang der axialen Erstreckung von positiv auf negativ bzw. abhängig von einer Drehrichtung des Laufrades auch von negativ auf positiv wechselnden Skelettkurvenendwinkel werden grundsätzlich unabhängig von einem konkreten Winkel und auch bereits bei sehr kleinen Winkeln erreicht.

Als besonders günstig hat es sich jedoch erwiesen, wenn die Leitschaufel ein Strömungsprofil mit einem Skelettkurvenendwinkel von mehr als 2 Grad, insbesondere 5 Grad bis 20 Grad, aufweist. Es hat sich gezeigt, dass gerade jener Bereich bei Wasserkraftwerken häufig zu besonders günstigen Wirkungsgraden führt.

Weiter hat es sich als vorteilhaft erwiesen, wenn die Leitschaufel ein Strömungsprofil mit einem Skelettkurvenendwinkel von weniger als minus 2 Grad, insbesondere minus 5 Grad bis minus 20 Grad, aufweist.

Insbesondere eine Leitschaufel, die in einem Bereich, beispielsweise einem oberen Randbereich, ein Profil mit einem Skelettkurvenendwinkel von minus 5 Grad bis minus 20 Grad, und in einem anderen Bereich, insbesondere unteren Randbereich, ein Profil mit einem Skelettkurvenendwinkel von 5 Grad bis 20 Grad aufweist, hat sich als günstig zur Erreichung vorteilhafter Strömungsverhältnisse erwiesen.

Eine Profildicke ist bei Strömungsprofilen abhängig von der Skelettlinie und üblicherweise nahe der Leitschaufeleintrittskante größer als in einem Bereich der Leitschaufelaustrittskante. Die Profildicke kann bei einer erfindungsgemäßen Leitschaufel im Wesentlichen unabhängig von der axialen Erstreckung sein, beispielsweise entlang der axialen Erstreckung um weniger als 20 % variieren. In einem besonders einfachen Fall kann die Leitschaufel damit beispielsweise in einem oberen Bereich ein nach oben gewölbtes Strömungsprofil bzw. eine Skelettlinie mit positiver Krümmung und in einem unteren Bereich das entsprechende Strömungsprofil, beispielsweise ein einem NACA-Profil ähnliches Strömungsprofil, aufweisen, welches nach unten gewölbt ist bzw. eine negativ gekrümmte Skelettlinie aufweist, sodass die Profildicke nur abhängig von einer Position an der Skelettlinie, jedoch unabhängig von der axialen Position ist. Alternativ ist es natürlich auch möglich, dass die Profildicke entlang der axialen Position variiert und ein unterer Bereich der Leitschaufel beispielsweise an gleichen Positionen relativ zur Skelettlinie größere Profildicken aufweist.

Beispielsweise kann auch vorgesehen sein, dass ein Strömungsprofil in einem unteren Bereich der Leitschaufel einem Strömungsprofil in einem oberen Bereich der Leitschaufel entspricht, welches um eine Profilsehnenebene gespiegelt ist.

Durch den hier beschriebenen neuen Designparameter einer Skelettlinie, welche die Lage relativ zur Profilsehne ändert, können auch Leitschaufeln gebildet werden, bei welchen die Lage der Skelettlinie relativ zur Profilsehne entlang der axialen Erstreckung mehrmals die Seite wechselt, sich also der Skelettkurvenendwinkel mehrmals von positiv auf negativ bzw. von negativ auf positiv ändert. Bevorzugt ist jedoch gerade für den Einsatz in einer Wasserkraftanlage vorgesehen, dass der Skelettkurvenendwinkel entlang einer axialen Erstreckung der Leitschaufel genau einmal das Vorzeichen wechselt, wobei der Skelettkurvenendwinkel insbesondere in einem bei bestimmungsgemäßer Verwendung oberen Bereich der Leitschaufel negativ und in einem bei bestimmungsgemäßer Verwendung unteren Bereich positiv ist. Dadurch können Strömungsverhältnisse im Zulauf zu einem Laufrad besonders gut in einer Weise beeinflusst werden, welche zur Reduktion von Verlusten beiträgt.

Bevorzugt ist vorgesehen, dass sich der Skelettkurvenendwinkel entlang einer axialen Erstreckung der Leitschaufel um mehr als 5 Grad, insbesondere um 10 Grad bis 40 Grad, ändert. Dadurch wird die Strömung günstig beeinflusst und werden gleichzeitig unerwünschte Ablösungen vermieden.

Günstig ist es, wenn die Leitschaufel entlang einer axialen Erstreckung mindestens ein Profil mit einer positiv gekrümmten Skelettlinie und mindestens ein Profil mit einer negativ gekrümmten Skelettlinie aufweist. Zwischen der positiv gekrümmten Skelettlinie und der negativ gekrümmten Skelettlinie kann die Leitschaufel auch einen geraden Bereich aufweisen, in welchem die Skelettlinie mit der Profilsehne zusammenfallen kann.

Erfindungsgemäß ist vorgesehen, dass die Leitschaufeleintrittskante gegenüber der Drehachse geneigt bzw. verdreht ist. Eine Leitschaufel mit um ein Leitapparatzentrum verdrehten Profilen wird auch als leaned bezeichnet. Bei zylindrischen Leitapparaten entspricht dies einer Verdrehung um die Turbinenachse. Es hat sich nun gezeigt, dass eine Leitschaufel, welche nicht nur relativ zur Drehachse geneigt bzw. verdreht ist, sondern auch zusätzlich gestrakt ist, zu besonders günstigen Strömungsverhältnissen führen kann, um Verluste zwischen Leitrad und Laufrad zu minimieren.

Es kann somit die Leitschaufel in der Weise ausgebildet sein, dass ein Abstand der Leitschaufeleintrittskante zur Drehachse zumindest bereichsweise, vorzugsweise über eine gesamte Höhe der Leitschaufel, mit zunehmender axialer Erstreckung der Leitschaufel stetig abnimmt oder zunimmt.

Es kann auch vorgesehen sein, dass die Leitschaufelaustrittskante zumindest bereichsweise gegenüber der Drehachse geneigt ist. Bevorzugt ist dann vorgesehen, dass ein Abstand der Leitschaufelaustrittskante zur Drehachse zumindest bereichsweise, vorzugsweise über eine gesamte Höhe der Leitschaufel, mit zunehmender axialer Erstreckung der Leitschaufel stetig abnimmt oder stetig zunimmt.

Besonders günstig ist es, wenn die Leitschaufel eine mit einer Seitenfläche korrespondierende Schließkante aufweist, sodass eine Schließkante einer Leitschaufel eine Seitenfläche einer daneben angeordneten Leitschaufel in einem geschlossenen Zustand der Leitschaufel berühren kann, um eine Strömung bei Bedarf gänzlich absperren zu können. Normalerweise ist die Schließkante im Bereich der Leitschaufelaustrittskante angeordnet und trifft diese Schließkante nahe der Leitschaufelaustrittskante (meist eine Oberseite der Austrittskante) auf die Seitenfläche der daneben angeordneten weiteren Leitschaufel nahe der Leitschaufeleintrittskante, um den geschlossenen Zustand zu erzeugen.

Grundsätzlich kann die Schließkante auch durch die Leitschaufelaustrittskante gebildet sein. Es kann auch vorgesehen sein, dass sich in einem geschlossenen Zustand die erste strömungsführende Seitenfläche einer Leitschaufel und die zweite strömungsführende Seitenfläche einer daneben angeordneten, zweiten Leitschaufel berühren, um einen geschlossenen bzw. dichten Zustand zu erreichen. In diesem Fall wird die Schließkante durch eine Berührungslinie oder eine Berührungsfläche der Seitenflächen gebildet.

Eine entsprechende Leitschaufel wird bevorzugt im Rahmen eines Leitrades für eine Pumpe oder Turbine, insbesondere für eine Kaplan- oder Francis-Turbine oder auch eine Rohrturbine eingesetzt. Folglich ist es günstig, wenn bei einem Leitrad für eine Pumpe oder Turbine, insbesondere für eine Kaplan- oder Francis-Turbine, das durch mehrere Leitschaufeln gebildet ist, die Leitschaufeln erfindungsgemäß ausgebildet sind.

Die Leitschaufel ist üblicherweise aus einem Metall gebildet, in der Regel massiv und kann beispielsweise durch Fräsen oder eine Blechkonstruktion hergestellt werden.

Eine positive Beeinflussung einer Strömung ist bei einem erfindungsgemäß ausgebildeten Leitrad grundsätzlich unabhängig von einer Größe möglich. Besonders bevorzugt ist jedoch vorgesehen, dass ein entsprechendes Leitrad einen Durchmesser von mehr als 2 m aufweist. Der Durchmesser des Leitrades kann beispielsweise an den Drehzapfen der Leitschaufeln gemessen werden. In diesem Fall wird der Durchmesser auch als Zapfenkreisdurchmesser bezeichnet. Es hat sich gezeigt, dass bei Maschinen dieser Größenordnung die erfindungsgemäßen Wirkungen besonders gut genutzt werden können.

Entsprechend weist die Leitschaufel üblicherweise eine Länge entlang der Drehachse von 0,5 m bis 10 m auf und kann ein Abstand der Leitschaufeleintrittskante von der Leitschaufelaustrittskante beispielsweise etwa 15 cm bis 3,0 m betragen.

Die weitere Aufgabe wird erfindungsgemäß durch ein Verfahren der eingangs genannten Art gelöst, bei welchem zumindest eine Variante ein erfindungsgemäß ausgebildetes Leitrad umfasst.

Durch die damit verbundene Vergrößerung des Lösungsraumes werden mögliche Lösungen der Auslegung berücksichtigt, die bei herkömmlichen Verfahren nicht untersucht werden, sodass durch die Vergrößerung des Lösungsraumes um Varianten mit gestrakten Leitschaufeln, die über die Profilsehne wechselnde Skelettlinien aufweisen, in vielen Fällen bessere Ergebnisse erreicht werden können.

Es versteht sich, dass die entsprechend ausgelegte Wasserkraftanlage üblicherweise in einem weiteren Schritt gemäß der ermittelten Auslegung hergestellt wird, um den rechnerisch und/oder empirisch ermittelten höheren Wirkungsgrad in weiterer Folge tatsächlich beim Betrieb der Wasserkraftanlage erreichen zu können.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 und 2 eine erfindungsgemäße Leitschaufel in unterschiedlichen Ansichten;
Fig. 3 bis 5 Strömungsprofile der in Fig. 1 und 2 dargestellten Leitschaufel;
Fig. 6 eine weitere Leitschaufel.

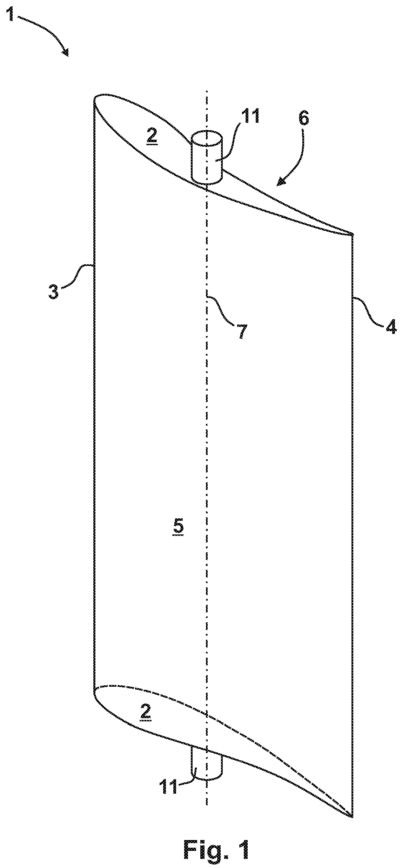

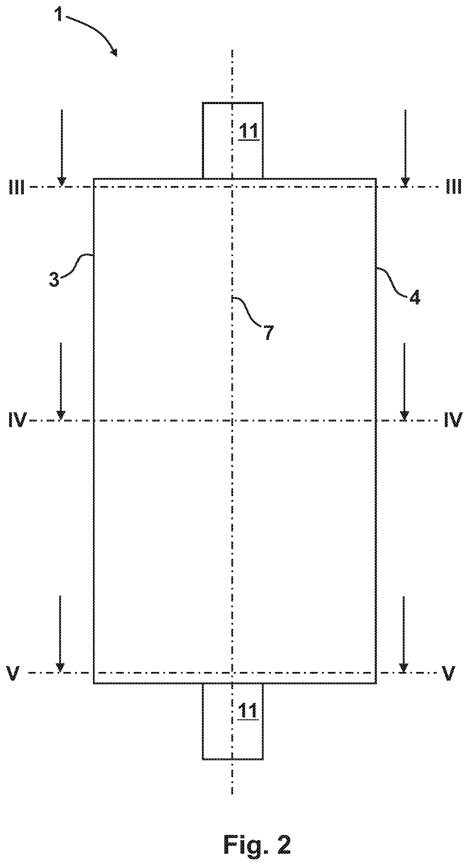

Fig. 1 und 2 zeigen eine erfindungsgemäße Leitschaufel 1, wobei Fig. 1 die Leitschaufel 1 in einer 3D-Ansicht und Fig. 2 die Leitschaufel 1 in einer Seitenansicht zeigen. Wie dargestellt weist die Leitschaufel 1 eine Leitschaufeleintrittskante 3 und eine Leitschaufelaustrittskante 4 auf, welche durch eine erste strömungsführende Seitenfläche 5 und eine zweite strömungsführende Seitenfläche 6 verbunden sind, welche Seitenflächen 5, 6 endseitig durch Stirnflächen 2 begrenzt werden.

Die Leitschaufel 1 ist zur drehbaren Anordnung in einem Einlaufgehäuse an den Stirnflächen 2 mit Drehzapfen 11 ausgebildet, welche eine Drehachse 7 definieren, um welche die Leitschaufel 1 drehbar lagerbar ist.

Die strömungsführenden Seitenflächen 5, 6 bilden in Schnitten normal zur Drehachse 7 Strömungsprofile 12 aus, wobei die Leitschaufel 1 entlang der Drehachse 7 bzw. entlang einer axialen Erstreckung entlang der Drehachse 7 unterschiedliche Profile aufweist, wie dies bereits in der Fig. 1 erkennbar ist.

Fig. 1 und 2 zeigen die Leitschaufel 1 jeweils in einer bestimmungsgemäßen Anordnung für eine Wasserkraftanlage mit vertikaler Achse, sodass in den Fig. 1 und 2 oben dargestellte Bereiche auch beim Einsatz in der Wasserkraftanlage oben und damit üblicherweise weiter vom Laufrad beabstandet als untere Bereiche sind.

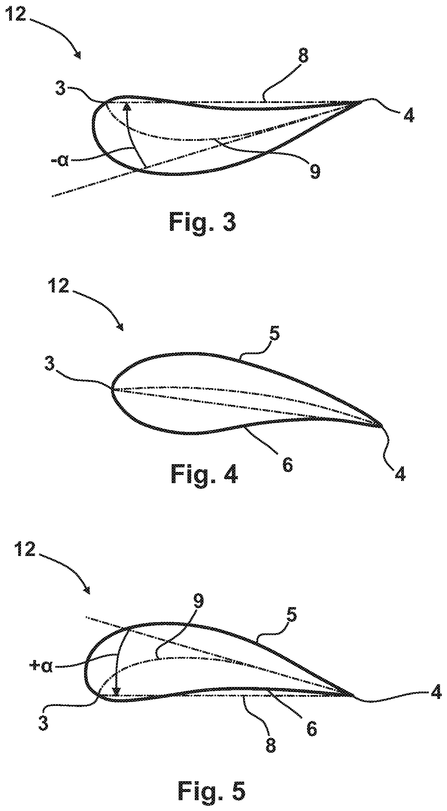

Fig. 3 zeigt eine Draufsicht auf einen Schnitt durch die Leitschaufel 1 entlang der Linie III-III in Fig. 2, Fig. 4 zeigt einen Schnitt durch die Leitschaufel 1 der Fig. 2 entlang der Linie IV-IV und Fig. 5 zeigt einen Schnitt entlang der Linie V-V in Fig. 2 jeweils in Draufsicht.

Die in den Fig. 3 bis Fig. 5 dargestellten Schnitte zeigen somit Strömungsprofile 12 an unterschiedlichen Höhenpositionen bzw. an unterschiedlichen Positionen entlang der Drehachse 7. Jedes Strömungsprofil 12 weist dabei analog zur Leitschaufel 1 eine Leitschaufeleintrittskante 3 und eine Leitschaufelaustrittskante 4 auf, welche durch die strömungsführenden Seitenflächen 5, 6 verbunden werden. Weiter weist jedes Strömungsprofil 12 eine Profilsehne 8 und eine Skelettlinie 9 auf, wobei die Profilsehne 8 durch eine gerade Verbindungslinie zwischen der Leitschaufeleintrittskante 3 und der Leitschaufelaustrittskante 4 definiert ist. Die Skelettlinie 9, welche auch Profilmittellinie, Wölbungslinie oder Krümmungslinie genannt wird, ist definiert durch die Verbindungslinie der in ein Profil eingeschriebenen Kreismittelpunkte.

Die Skelettlinie 9 steht an der Leitschaufelaustrittskante 4 unter einem in den dargestellten Draufsichten entgegen dem Uhrzeigersinn gemessenen Skelettkurvenendwinkel α zur Profilsehne 8, wodurch ein Abströmverhalten der Leitschaufel 1 in diesem Bereich wesentlich bestimmt ist. Dargestellt ist daher der Skelettkurvenendwinkel α an einer Tangente an die Skelettlinie 9 an der Leitschaufelaustrittskante 4.

Wie in den Fig. 3 bis 5 ersichtlich ist, ändert die Skelettlinie 9 ihre Lage relativ zur Profilsehe von unterhalb der Profilsehne 8 in einem oberen Bereich zu oberhalb der Profilsehne 8 in einem unteren Bereich. Dadurch ändert sich der Skelettkurvenendwinkel α von einem stark negativen Skelettkurvenendwinkel -α im in Fig. 3 dargestellten oberen Bereich zu einem schwach positiven Skelettkurvenendwinkel +α im in Fig. 4 dargestellten mittleren Bereich zu einem stark positiven Skelettkurvenendwinkel +α im in Fig. 5 dargestellten unteren Bereich. Die Verwendung unterschiedlicher Strömungsprofile über die axiale Erstreckung ergibt einen Profilstrak. Es kann dann beispielsweise ein gezielt höherer Drall der Strömung in einem oberen Bereich erreicht werden, wodurch die Strömung nach den Leitschaufeln 1 in einer Weise beeinflusst wird, die günstig für das nachfolgende Laufrad ist, sodass Verluste reduziert und ein Wirkungsgrad erhöht werden können.

Im dargestellten Ausführungsbeispiel beträgt der Skelettkurvenendwinkel α in dem in Fig. 3 dargestellten Strömungsprofil 12 im oberen Bereich der Leitschaufel 1 etwa minus 15 Grad und im unteren, in Fig. 5 dargestellten Strömungsprofil 12 etwa plus 15 Grad, sodass sich eine Verdrehung bzw. ein Strak von etwa 30 Grad vom oberen Bereich bis zum unteren Bereich ergibt.

Wie ersichtlich weisen die in Fig. 3 bis Fig. 5 dargestellten Strömungsprofile 12 der Leitschaufel 1 im Wesentlichen ähnliche Profildicken entlang der Skelettlinie 9 auf, sodass das in Fig. 5 dargestellte Strömungsprofil 12 annähernd eine Spiegelung des in Fig. 3 dargestellten Profils um eine horizontale Achse darstellt. Grundsätzlich sind jedoch auch Strömungsprofile 12 mit sich ändernden Profildicken möglich.

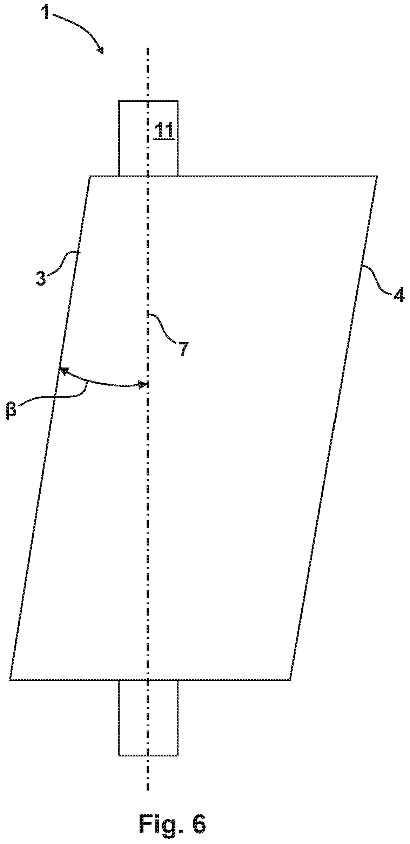

Fig. 6 zeigt eine weitere Leitschaufel 1, welche entlang einer axialen Erstreckung entlang der Drehachse 7 bzw. über eine Höhe verteilt Strömungsprofile 12 analog zu den in Fig. 3 bis 5 dargestellten Strömungsprofilen 12 aufweist, sodass auch diese Leitschaufel 1 eine gestrakte Leitschaufel 1 ist. Ergänzend weist diese Leitschaufel 1 jedoch auch eine gegenüber der Drehachse 7 geneigte Leitschaufeleintrittskante 3 und eine geneigte Leitschaufelaustrittskante 4 auf, weswegen eine solche Leitschaufel 1 auch als leaned bezeichnet werden kann.

Die Leitschaufeleintrittskante 3 und die Leitschaufelaustrittskante 4 weisen dabei einen Neigungswinkel β gegenüber der Drehachse 7 von beispielsweise 16 Grad auf, wobei wie in Fig. 6 dargestellt die Leitschaufeleintrittskante 3 und die Leitschaufelaustrittskante 4 über eine gesamte Länge geneigt sein können. Alternativ könnte auch vorgesehen sein, dass die Leitschaufelaustrittskante 4 nur über einen Teilbereich geneigt verläuft oder nur die Leitschaufeleintrittskante 3 geneigt sind.

Es hat sich gezeigt, dass in manchen Fällen durch eine Leitschaufel 1, welche nicht nur gestrakt, sondern auch leaned ist, ein besonders guter Wirkungsgrad erreicht werden kann.

Eine erfindungsgemäße Leitschaufel 1 wird üblicherweise im Rahmen eines Leitrades bzw. eines Leitapparates in Verbindung mit mehreren ident ausgebildeten weiteren Leitschaufeln 1 eingesetzt, welche regelmäßig entlang eines Kreises angeordnet und über die Drehzapfen 11 drehbar im Einlaufgehäuse gelagert sind, wobei die einzelnen Leitschaufeln 1 gleichzeitig betätigbar sind, um eine Strömung zu einem nachgelagerten Laufrad zu beeinflussen und bei Bedarf absperren zu können.

Hierzu weisen die Leitschaufeln 1 im Bereich der Leitschaufelaustrittskante 4 üblicherweise eine mit der Seitenfläche korrespondierende Schließkante auf, sodass sich in einem geschlossenen Zustand zwei nebeneinander angeordnete Leitschaufeln über die Schließkante und die Seitenfläche im Wesentlichen durchgängig entlang der axialen Erstreckung berühren und somit das Laufrad gegenüber einer Zuströmung abdichten.

Mit einem erfindungsgemäß ausgebildeten Leitrad können Verluste in Wasserkraftanlagen reduziert werden, sodass höhere Wirkungsgrade erreichbar sind.

Durch Einbeziehungen des entsprechenden Designparameters in ein Verfahren zur Auslegung einer Wasserkraftanlage wie beispielsweise einer Pumpe oder Turbine kann somit der Lösungsraum um vielversprechende Varianten erweitert werden, sodass mit einem erfindungsgemäßen Verfahren in vielen Fällen bessere Wasserkraftanlagen ausgelegt und in weiterer Folge hergestellt werden können. Hierzu werden bei der Variantenbildung auch Varianten mit erfindungsgemäß ausgebildeten Leiträdern berücksichtigt, wonach Strömungssituationen, insbesondere Strömungsgeschwindigkeiten zwischen dem Leitrad und dem Laufrad einer entsprechenden Wasserkraftanlage, berechnet und darauf basierend Verluste analysiert werden, wonach jene Variante als Auslegung der Wasserkraftanlage gewählt wird, bei welcher die besten Ergebnisse erzielt werden, insbesondere jene, bei welcher ein maximaler Wirkungsgrad erreicht wird. Anschließend wird die entsprechende Wasserkraftanlage gemäß der ermittelten Auslegung mit üblichen Verfahren hergestellt.

## Patentansprüche

1. Leitschaufel (1) für ein Leitrad einer Pumpe oder Turbine, aufweisend einen Leitschaufelkörper mit zwei Stirnflächen (2), einer Leitschaufeleintrittskante (3), einer Leitschaufelaustrittskante (4) sowie einer ersten strömungsführenden Seitenfläche (5) und einer zweiten strömungsführenden Seitenfläche (6), welche die Leitschaufeleintrittskante (3) und die Leitschaufelaustrittskante (4) verbinden und entlang einer axialen Erstreckung unterschiedliche Strömungsprofile (12) ausbilden, welche jeweils eine Profilsehne (8), eine Skelettlinie (9) und einen Skelettkurvenendwinkel (α), unter welchem die Skelettlinie (9) an der Leitschaufelaustrittskante (4) zur Profilsehne (8) steht, aufweisen, wobei die Leitschaufel (1) um eine Drehachse (7), welche insbesondere durch zwei Drehzapfen (11) definiert ist, drehbar lagerbar ist, wobei die Leitschaufel (1) entlang der axialen Erstreckung mindestens ein Strömungsprofil (12) mit einem positivem Skelettkurvenendwinkel (α) und mindestens ein Strömungsprofil (12) mit einem negativen Skelettkurvenendwinkel (α) aufweist, **dadurch gekennzeichnet, dass** die Leitschaufeleintrittskante (3) gegenüber der Drehachse (7) geneigt ist.

2. Leitschaufel (1) nach Anspruch 1, **dadurch gekennzeichnet, dass** die Leitschaufel (1) ein Strömungsprofil (12) mit einem Skelettkurvenendwinkel (α) von mehr als 2 Grad, insbesondere 5 Grad bis 20 Grad, aufweist.

3. Leitschaufel (1) nach Anspruch 1 oder 2, **dadurch gekennzeichnet, dass** die Leitschaufel (1) ein Strömungsprofil (12) mit einem Skelettkurvenendwinkel (α) von weniger als minus 2 Grad, insbesondere minus 5 Grad bis minus 20 Grad, aufweist.

4. Leitschaufel (1) nach einem der Ansprüche 1 bis 3, **dadurch gekennzeichnet, dass** der Skelettkurvenendwinkel (α) entlang einer axialen Erstreckung der Leitschaufel (1) genau einmal das Vorzeichen wechselt, wobei der Skelettkurvenendwinkel (α) insbesondere in einem bei bestimmungsgemäßer Verwendung oberen Bereich der Leitschaufel (1) negativ und in einem bei bestimmungsgemäßer Verwendung unteren Bereich positiv ist.

5. Leitschaufel (1) nach einem der Ansprüche 1 bis 4, **dadurch gekennzeichnet, dass** sich der Skelettkurvenendwinkel (α) entlang einer axialen Erstreckung der Leitschaufel (1) um mehr als 5 Grad, insbesondere um 10 Grad bis 40 Grad, ändert.

6. Leitschaufel (1) nach Anspruch 1 oder 5, **dadurch gekennzeichnet, dass** die Leitschaufel (1) entlang einer axialen Erstreckung mindestens ein Profil mit einer positiv gekrümmten Skelettlinie (9) und mindestens ein Profil mit einer negativ gekrümmten Skelettlinie (9) aufweist.

7. Leitschaufel (1) nach einem der Ansprüche 1 bis 6, **dadurch gekennzeichnet, dass** die Leitschaufeleintrittskante (3) gegenüber der Drehachse (7) um einen Neigungswinkel (β) von 1 Grad bis 20 Grad geneigt ist.

8. Leitschaufel (1) nach einem der Ansprüche 1 bis 7, **dadurch gekennzeichnet, dass** die Leitschaufelaustrittskante (4) gegenüber der Drehachse (7) um einen Neigungswinkel (β) von 1 Grad bis 20 Grad geneigt ist.

9. Leitschaufel (1) nach einem der Ansprüche 1 bis 8, **dadurch gekennzeichnet, dass** die Leitschaufel (1) eine mit einer Seitenfläche korrespondierende Schließkante aufweist, sodass eine Schließkante einer Leitschaufel eine Seitenfläche einer daneben angeordneten Leitschaufel (1) in einem geschlossenen Zustand der Leitschaufeln (1) berühren kann.

10. Leitrad für eine Pumpe oder Turbine, insbesondere für eine Kaplan- oder Francis-Turbine, das durch mehrere Leitschaufeln (1) gebildet ist, **dadurch gekennzeichnet, dass** die Leitschaufeln (1) nach einem der Ansprüche 1 bis 9 ausgebildet sind.

11. Leitrad nach Anspruch 10, **dadurch gekennzeichnet, dass** das Leitrad einen Durchmesser von mehr als 2 m aufweist.

12. Verfahren zum Auslegen einer Wasserkraftanlage, insbesondere einer Pumpe oder Turbine, mit einem Leitrad, welches Leitschaufeln (1) aufweist, insbesondere einer Kaplan- oder Francis-Turbine, wobei durch Variation von Designparametern verschiedene Varianten gebildet und Strömungsverhältnisse ermittelt werden, insbesondere mittels einer Strömungssimulation oder durch Versuche, welche durch Umsetzung der einzelnen Varianten erreichbar sind, wonach abhängig von erreichbaren Strömungsverhältnissen eine der Varianten gewählt wird, insbesondere jene Variante, bei welcher ein Wirkungsgradoptimum erreicht wird, **dadurch gekennzeichnet, dass** zumindest eine der Varianten ein Leitrad umfasst, welches nach Anspruch 10 oder 11 ausgebildet ist.

13. Verfahren zum Herstellen einer Wasserkraftanlage, **dadurch gekennzeichnet, dass** die Wasserkraftanlage gemäß einer mit einem Verfahren nach Anspruch 12 ermittelten Auslegung hergestellt wird.

## Claims

1. A guide vane (1) for a guide wheel of a pump or turbine, comprising a guide vane body with two end faces (2), a guide vane entry edge (3), a guide vane exit edge (4) and a first flow-guiding side surface (5) and a second flow-guiding side surface (6), which connect the guide vane entry edge (3) and the guide vane exit edge (4) and form different flow profiles (12) along an axial extension, which each have a profile chord (8), a skeleton line (9) and a skeleton curve end angle (α), at which the skeleton line (9) at the guide vane exit edge (4) stands to the profile chord (8), wherein the guide vane (1) can be rotatably mounted about an axis of rotation (7), which is defined in particular by two pivot pins (11), wherein the guide vane (1) has at least one flow profile (12) with a positive skeleton curve end angle (α) and at least one flow profile (12) with a negative skeleton curve end angle (α) along the axial extension, **characterised in that** the guide rail entry edge (3) is inclined with respect to the axis of rotation (7).

2. The guide vane (1) according to claim 1, **characterised in that** the guide vane (1) has a flow profile (12) with a skeleton curve end angle (α) of more than 2 degrees, in particular 5 degrees to 20 degrees.

3. The guide vane (1) according to claim 1 or 2, **characterised in that** the guide vane (1) has a flow profile (12) with a skeleton curve end angle (α) of less than minus 2 degrees, in particular minus 5 degrees to minus 20 degrees.

4. The guide vane (1) according to any one of claims 1 to 3, **characterised in that** the skeleton curve end angle (α) changes sign exactly once along an axial extension of the guide vane (1), wherein the skeleton curve end angle (α) is negative in particular in an upper region of the guide vane (1) when used as intended and is positive in a lower region when used as intended.

5. The guide vane (1) according to any one of claims 1 to 4, **characterised in that** the skeleton curve end angle (α) changes by more than 5 degrees, in particular by 10 degrees to 40 degrees, along an axial extension of the guide vane (1).

6. The guide vane (1) according to claims 1 or 5, **characterised in that** the guide vane (1) has at least one profile with a positively curved skeleton line (9) and at least one profile with a negatively curved skeleton line (9) along an axial extension.

7. The guide vane (1) according to any one of claims 1 to 6, **characterised in that** the guide vane entry edge (3) is inclined with respect to the axis of rotation (7) by an angle of inclination (β) of 1 degree to 20 degrees.

8. The guide vane (1) according to any one of claims 1 to 7, **characterised in that** the guide vane exit edge (4) is inclined with respect to the axis of rotation (7) by an angle of inclination (β) of 1 degree to 20 degrees.

9. The guide vane (1) according to any one of claims 1 to 8, **characterised in that** the guide vane (1) has a closing edge corresponding to a side surface, so that a closing edge of a guide vane can contact a side surface of a guide vane (1) arranged next to it in a closed state of the guide vanes (1).

10. A guide wheel for a pump or turbine, in particular for a Kaplan or Francis turbine, which is formed by a plurality of guide vanes (1), **characterised in that** the guide vanes (1) are designed according to any one of claims 1 to 9.

11. The guide wheel according to claim 10, **characterised in that** the guide wheel has a diameter of more than 2 m.

12. A method for designing a hydroelectric power plant, in particular a pump or turbine, with a guide wheel comprising guide vanes (1), in particular a Kaplan or Francis turbine, wherein different variants are formed by varying design parameters and flow conditions are determined, in particular by means of a flow simulation or by tests, which can be achieved by implementing the individual variants, according to which one of the variants is selected depending on achievable flow conditions, in particular the variant in which optimum efficiency is achieved, **characterised in that** at least one of the variants comprises a guide wheel which is designed according to claim 10 or 11.

13. The method for producing a hydroelectric power plant, **characterised in that** the hydroelectric power plant is produced according to a design determined by a method according to claim 12.

## Revendications

1. Aube directrice (1) pour un stator d'une pompe ou d'une turbine, comportant un corps d'aube directrice, doté de deux faces frontales (2), d'une arête d'entrée (3) d'aube directrice, d'une arête de sortie (4) d'aube directrice ainsi que d'une première surface latérale (5) guidant l'écoulement et d'une deuxième surface latérale (6) guidant l'écoulement, lesquelles relient l'arête d'entrée (3) d'aube directrice et l'arête de sortie (4) d'aube directrice et le long d'une extension axiale, constituent différents profils d'écoulement (12), dont chacun comporte une corde de profil (8), une ligne squelette (9) et un angle d'extrémité de courbure (α) de squelette, sous lequel la ligne squelette (9) se trouve sur l'arête de sortie (4) d'aube directrice par rapport à la corde de profil (8), l'aube directrice (1) étant susceptible d'être logée en rotation autour d'un axe de rotation (7), lequel est défini notamment par deux tourillons (11), l'aube directrice (1) comportant le long de l'extension axiale au moins un profil d'écoulement (12), doté d'un angle d'extrémité de courbure (α) positif et au moins un profil d'écoulement (12), doté d'un angle d'extrémité de courbure (α) négatif, **caractérisée en ce que** l'arête d'entrée (3) d'aube directrice est inclinée par rapport à l'axe de rotation (7).

2. Aube directrice (1) selon la revendication 1, **caractérisée en ce que** l'aube directrice (1) comporte un profil d'écoulement (12), doté d'un angle d'extrémité de courbure (α) de plus de 2 degrés, notamment de 5 degrés à 20 degrés.

3. Aube directrice (1) selon la revendication 1 ou 2, **caractérisée en ce que** l'aube directrice (1) comporte un profil d'écoulement (12), doté d'un angle d'extrémité de courbure (α) inférieur à moins 2 degrés, notamment à de moins 5 degrés à moins 20 degrés.

4. Aube directrice (1) selon l'une quelconque des revendications 1 à 3, **caractérisée en ce que** le long d'une extension axiale de l'aube directrice (1), l'angle d'extrémité de courbure (α) change précisément une fois de de signe, notamment dans une zone supérieure de l'aube directrice (1), lors d'une utilisation conforme, l'angle d'extrémité de courbure (α) étant négatif et dans une zone inférieure étant positif, lors d'une utilisation conforme.

5. Aube directrice (1) selon l'une quelconque des revendications 1 à 4, **caractérisée en ce que** l'angle d'extrémité de courbure (α) varie de plus de 5 degrés, notamment de 10 degrés à 40 degrés, le long d'une extension axiale de l'aube directrice (1).

6. Aube directrice (1) selon la revendication 1 ou 5, **caractérisée en ce que** le long d'une extension axiale, l'aube directrice (1) comporte au moins un profil, doté d'une ligne squelette (9) à courbure positive et au moins un profil, doté d'une ligne squelette (9) à courbure négative.

7. Aube directrice (1) selon l'une quelconque des revendications 1 à 6, **caractérisée en ce que** l'arête d'entrée (3) d'aube directrice est inclinée par rapport à l'axe de rotation (7) de la valeur d'un angle d'inclinaison (β) de 1 degré à 20 degrés.

8. Aube directrice (1) selon l'une quelconque des revendications 1 à 7, **caractérisée en ce que** l'arête de sortie (4) d'aube directrice est inclinée par rapport à l'axe de rotation (7) de la valeur d'un angle d'inclinaison (β) de 1 degré à 20 degrés.

9. Aube directrice (1) selon l'une quelconque des revendications 1 à 8, **caractérisée en ce que** l'aube directrice (1) comporte une arête de fermeture correspondant avec une surface latérale, de sorte qu'une arête de fermeture d'une aube directrice puisse toucher une surface latérale d'une aube directrice (1) placée à côté, dans un état fermé des aubes directrices (1).

10. Stator pour une pompe ou une turbine, notamment pour une turbine Kaplan ou une turbine Francis, qui est constitué de plusieurs aubes directrices (1), **caractérisé en ce que** les aubes directrices (1) sont conçues selon l'une quelconque des revendications 1 à 9.

11. Stator selon la revendication 10, **caractérisé en ce que** le stator présente un diamètre de plus de 2 m.

12. Procédé, destiné à dimensionner une centrale hydroélectrique, notamment une pompe ou une turbine, dotée d'un stator, lequel comporte des aubes directrices (1), notamment une turbine Kaplan ou une turbine Francis, par variation de diamètres de design, différentes variantes étant constituée et des rapports d'écoulement étant déterminés, notamment au moyen d'une simulation d'écoulement ou par des essais, que l'on peut atteindre par mise en application des variantes individuelles, suite à quoi, en fonction de rapports d'écoulement susceptibles d'être atteints, l'on sélectionne l'une des variantes, notamment la variante permettant d'atteindre un degré d'efficacité optimum, **caractérisé en ce qu'**au moins l'une des variantes comprend un stator, lequel est conçu selon la revendication 10 ou 11.

13. Procédé, destiné à fabriquer une centrale hydroélectrique, **caractérisé en ce que** l'on fabrique la centrale hydroélectrique d'après un dimensionnement déterminé à l'aide d'un procédé selon la revendication 12.
